(19) Europäisches Patentamt
European Patent Office
Office européen des brevets

(11) **EP 0 532 459 B1**

(12) **EUROPÄISCHE PATENTSCHRIFT**

(45) Veröffentlichungstag und Bekanntmachung des Hinweises auf die Patenterteilung:
**23.10.1996 Patentblatt 1996/43**

(51) Int Cl.6: **F16L 21/02**

(21) Anmeldenummer: **92810628.5**

(22) Anmeldetag: **18.08.1992**

(54) **Muffe zum Verbinden zweier Kunststoffrohre.**

Junction sleeve for two plastic pipes.

Manchon de jonction pour deux tuyaux en matière plastique.

(84) Benannte Vertragsstaaten:
**AT BE CH DE ES FR GB IT LI LU NL SE**

(30) Priorität: **06.09.1991 CH 2622/91**

(43) Veröffentlichungstag der Anmeldung:
**17.03.1993 Patentblatt 1993/11**

(73) Patentinhaber: **Hobas Engineering AG**
**CH-4054 Basel (CH)**

(72) Erfinder: **Carlström, Börge**
**CH-4104 Oberwil (CH)**

(74) Vertreter: **Eder, Carl E. et al**
**Patentanwaltsbüro EDER AG**
**Lindenhofstrasse 40**
**4052 Basel (CH)**

(56) Entgegenhaltungen:
EP-A- 0 080 110          CH-A- 479 836
FR-A- 806 525          US-A- 4 915 422

## Beschreibung

Zum Verbinden zweier Rohre werden Muffen verwendet. Als Muffen dienen entweder zylindrische Rohrabschnitte, in die sich von jeder Seite das eine Ende je eines Rohres einschrauben oder einschieben und irgendwie befestigen lässt. Es ist aber auch möglich, das eine Ende eines Rohres bei der Herstellung mit einer als Muffe dienenden Erweiterung zu versehen, in die dann das nicht erweiterte Ende eines gleichartig ausgebildeten Rohres eingeschoben wird. Diese beiden Verfahren sind auch bei Kunststoffrohren bekannt. Bekannt sind des weitern die Vor- und auch die Nachteile dieser beiden Muffenarten.

Um eine dichte Verbindung zwischen dem Rohr und der Muffe sicherzustellen, kann man entweder das Rohr oder die Muffe mit Dichtungsmitteln versehen. Bekannt ist es, in der Nähe des Rohrendes eine Nut anzubringen, in welcher ein Dichtungsmittel wie zum Beispiel ein O-Ring oder etwas ähnliches untergebracht wird. Da dadurch die Wandstärke des Rohres geschwächt wird, was insbesondere bei verhältnismässig dünnwandigen Rohren nicht erwünscht ist und daher vermieden werden sollte, sind auch Muffen bekannt, die aus einem elastischen, allenfalls mit Lippen versehenen Innenteil und einem auf diesem aufgebrachten Überzug aus festem Material bestehen. Derartige Muffen lassen sich nur mit grossem Aufwand herstellen und sind daher teurer.

Aus der CH-PS 479 836 ist nun ein Kanalisations-Rohr aus Steingut bekannt, dass an einem Ende mit einer Muffe, d.h. einer Erweiterung versehen ist, in welche das gerade, dichtungsmittelfreie Ende eines zweiten Steingutrohres eingeschoben werden kann. Diese Erweiterung ist innen mit einer angegossenen Dichtungslippe aus Polyurethan versehen, die auch dann eine hinreichende Dichtung gewährleisten soll, wenn die Genauigkeit der inneren und äusseren Rohrabmessungen nicht optimal ist. Zur Herstellung einer derartigen Dichtungslippe wird ein hohlzylindrischer Einsatz aus Silikonkautschuk verwendet, den man innerhalb der Muffe, aber aussen auf einem zu ihr konzentrischen Hilfszylinder anbringt. Es hat sich nicht nur aus Gründen des rationellen Transports, sondern auch aus der sparsamen Materialverwendung als zweckmässig erwiesen, glasfaserverstärkte Kunststoffrohre so herzustellen, dass sie auf ihrer ganzen Länge den gleichen Aussen- und Innendurchmesser haben, also nicht mit angegossenen oder angesetzten oder anderswie geformten Muffen versehen sind. Aufgabe der vorliegenden Erfindung ist daher die Schaffung einer Muffe, mit der sich zwei gerade, schulterfreie und dichtungsmittelfreie Rohre aus glasfaserarmiertem Kunststoff auch dann auf einfache Art und Weise verbinden lassen, wenn die Achsen der beiden Rohre nicht genau in einer Geraden liegen. Dabei sollen natürlich die Kosten für die Herstellung einer solchen Muffe nicht wesentlich grösser sein, als die für die Herstellung eines entsprechenden Rohrstückes und zur die Beschaffung einer brauchbaren Dichtung aufzuwendenden Kosten. Die Muffe nach der vorliegenden Erfindung genügt nun allen diesen Anforderungen. Sie weist auch keine der bei den bekannten Muffen vorhandenen Nachteile auf, da sie so ausgebildet ist, dass sie sich dank ihrer Innendichtungsmittel dicht auf ein dichtungsmittelfreies Rohrende aufschieben und gewünschtenfalls an ihm befestigen lässt, so dass ein weiteres Rohr dicht, aber doch lösbar in diese eingeschoben werden kann.

Die erfindungsgemässe Muffe, die speziell zum Verbinden zweier dichtungsfreier und schulterfreier glasfaserverstärkter Kunststoffrohre geeignet ist, ist durch die Merkmale des Anspruchs 1 gekennzeichnet.

Nachfolgend wird anhand der beiliegenden Zeichnung ein Ausführungsbeispiel der Erfindung beschrieben. In der Zeichnung zeigt

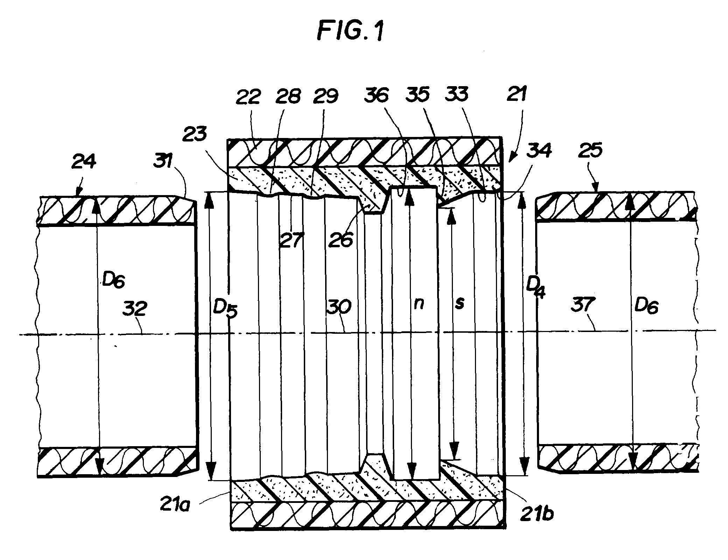

die Figur 1      einen Längsschnitt durch eine erfindungsgemässe Muffe sowie durch die beiden Enden der miteinander zu verbindenden Rohre.

Die in der Figur 1 dargestellte und als ganzes mit 21 bezeichnete Muffe zum Verbinden der beiden glasfaserverstärkten Kunststoffrohre 24 und 25 weist eine im wesentlichen zylindrische Aussenschicht 22 aus glasfaserverstärktem Kunststoff auf sowie eine mit 23 bezeichnete, aus Polyurethan bestehende Innenschicht. Diese Innenschicht besitzt etwa in der Mitte zwischen den beiden Muffenenden 21a und 21b eine als Anschlag für die beiden miteinander zu verbindenden Rohre 24 und 25 dienende Rippe 26. Zwischen dieser Rippe 26 und dem einen, in der Zeichnung dem linken, Muffenende 21a erweitert sich die Muffeninnenfläche 27 konisch. Diese konische Fläche ist im Ausführungsbeispiel mit zwei rings herumlaufenden, ziemlich flachen Dichtungswulsten 28 und 29 versehen. Die konische Innenfläche 27 bildet mit der Achse 30 einen Winkel von ca. 4°. Wenn nun der Innendurchmesser $D_5$ an der Seite 21a der Muffe 21 ein klein wenig grösser ist als der Aussendurchmesser $D_6$ des Rohres 24, lässt sich die Muffe gut auf das Rohrende aufschieben. Die in der Zeichnung dargestellte Anschrägung 31 am Rohrende macht es auch gut möglich, dass die Muffe trotz der Wülste 28 und 29 ohne grosse Schwierigkeit auf das Rohrende aufgeschoben werden kann, bis die Rippe 26 am Rohrende ansteht. Bei diesem Aufschieben verformt sich natürlich das Muffeninnere etwas und es wird die Polyurethanschicht 23 insbesondere im Bereich der Wulste 28 und 29 komprimiert. Wenn man das Rohräussere oder das Muffeninnere mit einem Klebstoff versieht, so lässt sich die Muffe 21 dauerhaft und unlösbar so mit dem Rohr 24 verbinden, dass die Muffenachse 30 mit der Rohrachse 32 zusammenfällt.

Der Bereich im Muffeninnern zwischen der Rippe 26 und dem in der Zeichnung rechten Muffenende 21b ist nun etwas anders ausgebildet: Zu äusserst befindet sich ein zylindrischer Abschnitt 33, der hier an seinem äusseren Ende noch mit einer Anschrägung 34 versehen sein kann. An diesen zylindrischen Abschnitt 33 schliesst sich eine sägezahnförmig ins Muffeninnere hineinragende Rippe 35 an, während zwischen dieser Rippe 35 und der Rippe 26 eine ringförmige Nut 36 ausgespart ist. Wie aus der Zeichnung ersichtlich ist, ist der Innendurchmesser n der Nut 36 etwas grösser als der Innendurchmesser $D_4$ des zylindrischen Abschnitts 33. Dieser stimmt im wesentlichen mit dem Innendurchmesser $D_5$ am gegenüberliegenden Muffenende 21 a überein, wobei er besonders dann, wenn der zylindrische Teil 33 mit einer Anschrägung 34 versehen ist, unwesentlich kleiner sein kann als der Durchmesser $D_5$ am freien Ende des konischen Abschnitts 27. Auch dieses Muffenende 21b ist zum Einstecken eines Rohres 25 mit dem Aussendurchmesser $D_6$ bestimmt, wobei die Abmessungen vorzugsweise so gewählt werden, dass

$$D_6 \leq D_4 \leq 1{,}005\, D_6$$

d.h. der Innendurchmesser $D_4$ des zylindrischen Abschnitts 33 gleich gross oder bis zu 0,5% grösser ist als der Aussendurchmesser $D_6$ des Rohres 25, während der Durchmesser n der Nut 36 2% bis 5% grösser ist als der Aussendurchmesser $D_6$ dieses Rohres. Im Unterschied dazu ist aber der Innendurchmesser s der Sägezahnrippe 35 5% bis 10% kleiner als der Aussendurchmesser $D_6$ des Rohres 25. Es ist also

$$\frac{98{,}5}{100}\, D_6 \leq s \leq \frac{99{,}65}{100}\, D_6\;.$$

Diese Abmessungen auf der rechten Seite der Muffe ermöglichen ein leichtes Einfahren des Rohres 25 in die Muffe, gewährleisten einen dichten Abschluss durch die sägezahnförmige Rippe 35, die beim Einschieben des Rohres 25 verformt, d.h. komprimiert sowie etwas umgebogen wird, und machen es durch die Nut 36 möglich, das die Achse 30 der Muffe 21 mit der Achse 37 des Rohres 25 einen kleinen Winkel von bis zu 5° bilden kann.

Beim Einstecken eines sehr grossen und entsprechend schweren Rohres, also eines Rohres mit einem Durchmesser von 1 m und mehr, wird sich zwischen der zylindrischen Innenfläche 33 der Muffe und der Aussenfläche des Rohres 25 nicht ein Spalt gleichmässiger Weite bilden, sondern das Rohr wird unten auf der zylindrischen Fläche 33 aufliegen und zwischen dem Rohr 25 und dem oberen Teil der zylindrischen Fläche wird je nach den Abmessungen eine Spaltöffnung von bis zu 0,5% des Rohrdurchmessers entstehen. Dabei bleibt der dichte Anschluss des Rohres 25 in der Muffe 21 jedoch gewährleistet, weil ja der Innendurchmesser der Sägezahnrippe 35 mindestens 0,35% kleiner ist als der Durchmesser $D_6$ des Rohres 25.

## Patentansprüche

1. Mit Dichtungsmitteln versehene Muffe (21) zum Verbinden zweier schulterfreier, dichtungsmittelfreier Kunstoffrohre (24, 25), mit dem Aussendurchmesser $D_6$ dadurch gekennzeichnet,

   - dass sie eine im wesentlichen zylindrische Aussenschicht (22) aus glasfaserverstärktem Kunststoff sowie eine aus angegossenem Polyurethan bestehende Innenschicht (23) mit einem gegen das Muffeninnere abnehmenden Innendurchmesser aufweist, wobei in einem Abschnitt zwischen den beiden Rändern der Innendurchmesser der Muffe mindestens so gross ist wie an dem Rand mit dem grösseren Innendurchmesser,
   - dass die Innenschicht (23) etwa in der Mitte zwischen den beiden Muffenenden (21a, 21b) eine als Anschlag für die miteinander zu verbindenden Rohre (24, 25) dienende Rippe (26) aufweist,
   - dass sich die Muffeninnenfläche (27) von dieser Rippe (26) zu dem einen Muffenende (21a) hin konisch erweitert und mit mindestens einem rings herumlaufenden Dichtungswulst (28, 29) versehen ist,
   - während sich zwischen dem anderen Muffenende (21b) und der Rippe (26) ein zylindrischer Abschnitt (33), eine sägezahnförmig ins Muffeninnere hineinragende Rippe (35) und anschliessend an deren radial verlaufende Flanke eine ringförmige Nut (36) befinden, wobei der Nutendurchmesser n grösser ist als der Innendurchmesser $D_4$ des zylindrischen Abschnittes (33) und dieser im wesentlichen mit dem Durchmesser $D_5$ am gegenüberliegenden Muffenende (21a) übereinstimmt.

2. Muffe nach Anspruch 1, dadurch gekennzeichnet, dass für den Innendurchmesser $D_4$ des zylindrischen Abschnittes gilt

   $$D_6 \leq D_4 \leq 1{,}005\, D_6$$

   und für den Innendurchmesser s der Sägezahnrippe

   $$\frac{98{,}5}{100}\, D_6 \leq s \leq \frac{99{,}65}{100}\, D_6\;.$$

## Claims

1. Coupler (21), which is provided with sealing means, for connecting two shoulderless plastics material pipes (24, 25), which are free of sealing means, with

the external diameter $D_6$, characterised thereby

- that it comprises a substantially cylindrical outer layer (22) of glassfibre-reinforced plastics material as well as an inner layer (23), which consists of cast-on polyurethane, with an internal diameter decreasing towards the coupler interior, wherein the internal diameter of the coupler in a section between the two rims is at least as large as at the rim with the greater internal diameter,
- that the inner layer (23) has, approximately in the middle between the two coupler ends (21a, 21b), a rib (26) serving as abutment for the pipes (24, 25) to be connected together,
- that the coupler inner surface (27) conically widens from this rib (26) to the one coupler end (21a) and is provided with at least one annularly encircling sealing bead (28, 29),
- whereas a cylindrical section (33), a rib (35), which projects in sawtooth-shape into the coupler interior, and an annular groove (36) adjoining the radially extending flank of the rib (35) are disposed between the other coupler end (21b) and the rib (26), wherein the groove diameter n is greater than the internal diameter $D_4$ of the cylindrical section (33) and the latter substantially corresponds with the diameter $D_5$ at the opposite coupler end (21a).

2. Coupler according to claim 1, characterised thereby that there applies for the internal diameter $D_4$ of the cylindrical section

$$D_6 \leq D_4 \leq 1.005 \, D_6$$

and for the internal diameter S of the sawtooth rib

$$\frac{98.5}{100} \, D_6 \leq s \leq \frac{99.65}{100} \, D_6.$$

**Revendications**

1. Manchon (21) muni de moyens d'étanchéité pour raccorder deux tuyaux (24, 25) exempts d'épaulement, exempts de moyen d'étanchéité, de diamètre extérieur $D_6$, caractérisé par le fait

- qu'il présente une couche extérieure (22) sensiblement cylindrique de plastique armé de fibres de verre, ainsi qu'une couche intérieure (23), constituée de polyuréthane appliqué par coulée, d'un diamètre intérieur allant en diminuant en direction de l'intérieur du manchon, le diamètre intérieur du manchon étant, sur une portion située entre les deux bords, au moins aussi grand qu'au bord présentant le plus grand diamètre intérieur,
- que la couche intérieure (23) présente, à peu près au milieu, entre les deux extrémités (21a, 21b du manchon, une nervure (26) qui sert de butée pour les tuyaux (24, 25) à raccorder l'un avec l'autre,
- que la surface intérieure (27) du manchon va en s'élargissant en cône depuis cette nervure (26) jusqu'à l'une des extrémités (21a) du manchon et qu'elle présente au moins un bourrelet d'étanchéité (28, 29) qui entoure en continu à la façon d'un anneau,
- tandis qu'entre l'autre extrémité (21b) du manchon et la nervure (26) se trouvent une portion cylindrique (33), une nervure (35) en forme de dent de scie, qui pénètre dans l'intérieur du manchon, et ensuite, contre son flanc orienté radialement, une rainure annulaire (36), le diamètre n de la rainure étant supérieur au diamètre intérieur $D_4$ de la portion cylindrique (33) et celui-ci coïncidant sensiblement avec le diamètre $D_5$ à l'extrémité opposée (21a) du manchon.

2. Manchon selon la revendication 1, caractérisé par le fait que pour le diamètre intérieur $D_4$ de la portion cylindrique on a

$$D_6 \leq D_4 \leq 1{,}005 \, D_6$$

et que pour le diamètre intérieur s de la nervure en dent de scie on a

$$\frac{98{,}5}{100} \, D_6 \leq s \leq \frac{99{,}65}{100} \, D_6 \; .$$

## FIG.1